# EUROPEAN PATENT SPECIFICATION

(11) **EP 4 672 222 B1**
(45) Date of publication and mention of the grant of the patent: **05.08.2026**
(21) Application number: 24184048.7
(22) Date of filing: 24.06.2024
(51) Int. Cl.: G10D 13/10, G10D 13/063

(54) **CLAMPING ROD FRAME**
TREIBSTANGENRAHMEN
CADRE DE TIGE DE SERRAGE

(43) Date of publication of application: 31.12.2025
(73) Proprietor: Liao, Tsun-Chi, Taichung City (TW)
(72) Inventor: Liao, Tsun-Chi, Taichung City (TW)
(74) Representative: 2K Patent Partnerschaft mbB

(56) References cited:
- GB-A- 2 585 713
- US-A- 6 096 956
- US-A1- 2010 278 585
- US-A1- 2013 174 711
- US-B1- 11 680 680
- US-B1- 8 426 712

## Description

### FIELD OF THE INVENTION

The present invention relates to support structures for musical instruments and, in particular, to a clamping rod frame for clamping a vertical rod for the musical instruments.

### BACKGROUND OF THE INVENTION

When playing, a variety of musical instruments and a music sheet will need to be set up for the performers to use. The performers will use a clamp disclosed in US 9 633 635 B2 to combine various musical instruments such as cymbals, drums, cowbells, etc., and the music sheet on the vertical rod, and the vertical rod is set on a tripod to be placed beside the performer.

An operation method of US 9 633 635 B2 mainly involves rotating a screw locking member, pressing an outer curved surface of a movable member, allowing the movable member to rotate relative to a fixed member, and clamping a vertical rod by allowing the fixed member to come close to the movable member, so as to satisfy the need for rapid assembly and disassembly.

However, in the process of pressing the outer curved surface of the movable member by the screw locking member, the screw locking member moves relative to the outer curved surface under friction, which will wear out the outer curved surface and cause deformation of the outer curved surface. When the deformation is serious, the clamp will not be able to provide sufficient clamping force and cannot be used, and the outer curved surface of the movable member, once it is worn out, it can only be replaced as a whole set, which does not have any value of repair, so obviously the service life cannot satisfy the demand of the use.

In addition, for the purpose of performance, the player may also use a rotary joint as disclosed in US 9 310 021 B2. The rotary joint has a lower joint and an upper joint, and the upper and lower joints can be connected to a vertical rod respectively, and after rotating and loosening knobs of the rotary joints, the user can rotate and change a relative angle of the lower joint and the upper joint, thereby adjusting a relative inclination angle of the two vertical rods to meet the needs of playing.

The rotary joint as mentioned above requires the use of two vertical rods to adjust the relative inclination angle, and if used with the aforementioned clamp, the possibility of loosening of the clamp will increase due to the increase in weight.

US 6 096 956 discloses a clamp device having a main body and a pivotable, pipe clamping holder. A first bolt and nut connect the main body and the pivotable holder and allow them to pivot with reference to the first bolt. Another bolt is pivotally connected to the main body and can be swung in a groove in the second holder and the other nut is held in the groove by a respective nut. The two bolts cooperate to clamp a pipe. An arm to one side of the second holder and the main body is operable for pivoting the second holder around the second bolt to selectively open or close the clamping against the main body. A spring on the first bolt biases the second holder contrary to the force applied to the arm. The main body extends to a further clamping hole. An additional pipe holding, adjustable angle member may be installed in the further hole.

### SUMMARY OF THE INVENTION

It is an object of the present invention to provide a cost-efficient clamping rod frame configured for clamping a vertical rod, that can be operated in a more flexible and easier manner.

According to the present invention, this problem is solved by a clamping rod frame as claimed in claim 1. Further advantageous embodiments are the subject-matter of the dependent claims.

A clamping rod frame according to the present invention enables a relatively long service life and enables an adjustment of the tilt angle.

According to the present invention there is provided a clamping rod frame for clamping a vertical rod, provided (configured) for clamping a vertical rod, including a first clamping block, a second clamping block, a first locking member, a vertical rotating joint, a second locking member, a horizontal rotating joint, a third locking member, a mounting rod. The first clamping block includes a first clamping surface configured to be positioned adjacent to the vertical rod, the second clamping block includes a second clamping surface configured to be positioned adjacent to the vertical rod, the first clamping block includes a first through hole, and the second clamping block includes a second through hole corresponded to the first through hole. The first locking member includes a first screw locking head and a first bolt, the first bolt passes through the second through hole and the first through hole and is screw locked with the first screw locking head, the first screw locking head and the first bolt press the first clamping block close to the second clamping block, so that the vertical rod is sandwiched between the first clamping surface and the second clamping surface.

The vertical rotating joint includes a first vertical joint and a second vertical joint overlapping and relatively rotating to each other, and the first vertical joint is connected to the second clamping block. The second locking member includes a second screw locking head and a second bolt, and the second screw locking head and the second bolt press the first vertical joint and the second vertical joint to clamp and fix each other.

The horizontal rotating joint includes a first horizontal joint and a second horizontal joint overlapping and relatively rotating to each other, and the first horizontal joint is connected to the second vertical joint. The third locking member includes a third screw locking head and a third bolt, the third bolt passes through the second horizontal joint and the first horizontal joint and is screw locked with the third screw locking head, the third screw locking head and the third bolt press the first horizontal joint and the second horizontal joint to clamp and fix each other, and the third bolt is provided with a mounting ring at an end opposite to the third screw locking head. The second horizontal joint is provided with an accommodating slot and a groove, the accommodating slot correspondingly accommodates the mounting ring, the groove crosses the accommodation slot and penetrates the second horizontal joint, and the groove is in a direction identical to an axial direction of the mounting ring. The mounting rod is inserted into the mounting ring and pressed and fixed by the groove when the first horizontal joint and second horizontal joint are clamped.

According to the present invention, the first clamping block and the second clamping block are pivotally connected together through a pivot so that the first clamping block and the second clamping block can be rotated relative to each other to allow the first clamping surface and the second clamping surface (to come) close together (in particular for adjustment of the distance between the first clamping surface and the second clamping surface), and the second bolt passes through the second vertical joint and the first vertical joint and is screw locked with the second screw locking head.

Accordingly, the mounting rod of the invention can be used to set up various musical instruments and auxiliary equipment, and has degrees of rotational freedom in two directions through the vertical rotating joint and the horizontal rotating joint, so the tilt angle can be freely adjusted. Additionally, by pressing the first clamping block and the second clamping block closer together through the first screw locking head and the first bolt, the first clamping surface and the second clamping surface sandwich the vertical rod. Moreover, once the first screw locking head and the first bolt are damaged, which can be directly replaced to increase the service life.

### BRIEF DESCRIPTION OF THE DRAWING

Fig. 1 is a schematic view of the three-dimensional structure of the present invention.
Fig. 2 is an exploded diagram of the present invention.
Fig. 3 is a first schematic view for use of the present invention.
Fig. 4 is a second schematic view for use of the present invention.
Fig. 5 is a third schematic view for use of the present invention.

### DETAILED DESCRIPTION OF THE PREFERRED EMBODIMENTS

The technical contents of the present invention are described as follows with reference to the accompanying drawings.

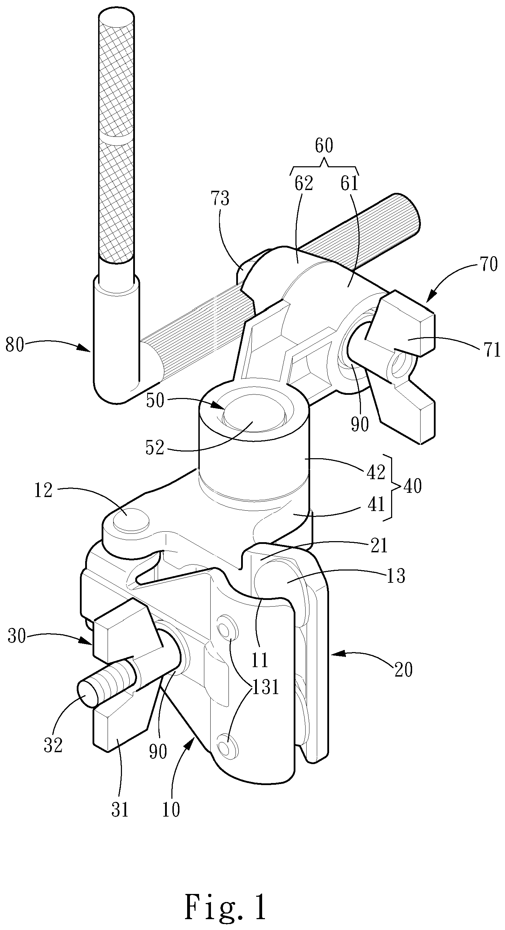

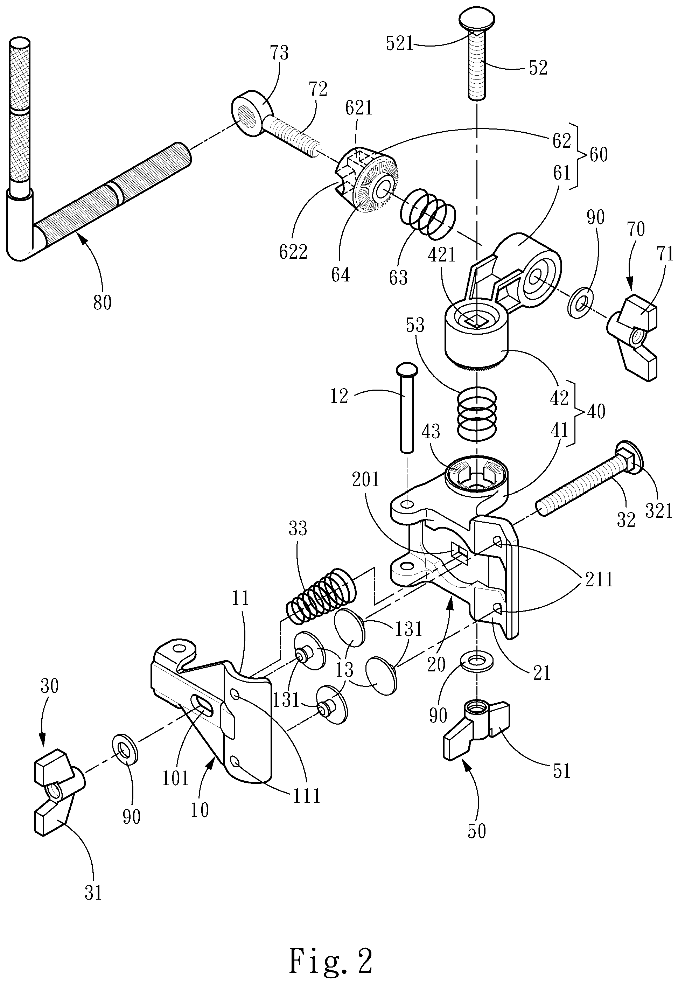

Please refer to Fig. 1, Fig. 2 and Fig. 3, the present invention provides a clamping rod frame for clamping a vertical rod L. The clamping rod frame includes a first clamping block 10, a second clamping block 20, a first locking member 30, a vertical rotating joint 40, a second locking member 50, a horizontal rotating joint 60, a third locking member 70, and a mounting rod 80. The first clamping block 10 includes a first clamping surface 11 configured to be positioned adjacent to the vertical rod L, the second clamping block 20 includes a second clamping surface 21 configured to be positioned adjacent to the vertical rod L, and the first clamping block 10 and the second clamping block 20 are pivotally connected together through a pivot 12, so that the first clamping block 10 and the second clamping block 20 can be rotated relative to each other, allowing the first clamping surface 11 and the second clamping surface 21 close together (to come closer together, in particular the distance between the first clamping surface 11 and the second clamping surface 21 can be adjusted by relative rotation). The first clamping block 10 includes a first through hole 101 and the second clamping block 20 includes a second through hole 201, and a position of the first through hole 101 corresponds to a position of the second through hole 201. Preferably, the first through hole 101 is an elongated hole.

The first locking member 30 includes a first screw locking head 31 and a first bolt 32. The first bolt 32 passes through the second through hole 201 and the first through hole 101 and is screw locked with the first screw locking head 31. The first screw locking head 31 and the first bolt 32 press the first clamping block 10 close to the second clamping block 20, so that the vertical rod L is sandwiched between the first clamping surface 11 and the second clamping surface 21. In one embodiment, in order to increase the stability of clamping, the first clamping surface 11 and the second clamping surface 21 are respectively provided with a plurality of clamping soft pads 13 and a plurality of through holes 111, 211. The plurality of clamping soft pads 13 of the first clamping surface 11 and the second clamping surface 21 are respectively provided with a protruding post 131 to engage with each of the plurality of through holes 111, 211. In one embodiment, the second through hole 201 is in a shape of rectangular, and the first bolt 32 includes a rectangular block 321 provided for the second through hole 201 being correspondingly engaged.

The vertical rotating joint 40 includes a first vertical joint 41 and a second vertical joint 42. The first vertical joint 41 and the second vertical joint 42 overlap and can be rotated relative to each other, and the first vertical joint 41 is connected to the second clamping block 20.

The second locking member 50 includes a second screw locking head 51 and a second bolt 52. The second bolt 52 passes through the second vertical joint 42 and the first vertical joint 41 and is screw locked with the second screw locking head 51. The second screw locking head 51 and the second bolt 52 press the first vertical joint 41 and the second vertical joint 42 to clamp and fix each other. In one embodiment, in order to increase the stability, the first vertical joint 41 and the second vertical joint 42 are respectively provided with a first concave and convex engaging structure 43 on contact surfaces thereof. The second bolt 52 may be provided with a rectangular block 521, and the second vertical joint 42 includes a rectangular through hole 421 for the rectangular block 521 being correspondingly engaged.

The horizontal rotating joint 60 includes a first horizontal joint 61 and a second horizontal joint 62. The first horizontal joint 61 and the second horizontal joint 62 overlap and cam be rotated relative to each other, and the first horizontal joint 61 is connected to the second vertical joint 42.

The third locking member 70 includes a third screw locking head 71 and a third bolt 72. The third bolt 72 passes through the second horizontal joint 62 and the first horizontal joint 61 and is screw locked with the third screw locking head 71. The third screw locking head 71 and the third bolt 72 press the first horizontal joint 61 and the second horizontal joint 62 to clamp and fix each other. In one embodiment, in order to increase the stability, the first horizontal joint 61 and the second horizontal joint 62 are respectively provided with a second concave and convex engaging structure 64 on contact surfaces thereof. The third bolt 72 is provided with a mounting ring 73 at one end opposite to the third screw locking head 71, the second horizontal joint 62 is provided with an accommodation slot 621 and a groove 622, the accommodation slot 621 correspondingly accommodates the mounting ring 73, the groove 622 crosses the accommodation slot 621 and penetrates the second horizontal joint 62, and the groove 622 is in a direction identical with an axial direction of the mounting ring 73.

The mounting rod 80 is inserted into the mounting ring 73 and is pressed and fixed by the groove 622 when the first horizontal joint 61 and second horizontal joint 62 are clamped (as shown in Fig. 1).

In order to prevent the first bolt 32, the second bolt 52, and the third bolt 72 from loosening, the first bolt 32 is inserted into a conical spring 33, and a conical direction of the conical spring 33 is toward the first screw locking head 31. The second bolt 52 and the third bolt 72 are respectively inserted into a compression spring 53, 63. In addition, in order to extend service life, the first screw locking head 31, the second screw locking head 51 and the third screw locking head 71 respectively press the first clamping block 10, the first vertical joint 41 and the first horizontal joint 61 by a baffle 90.

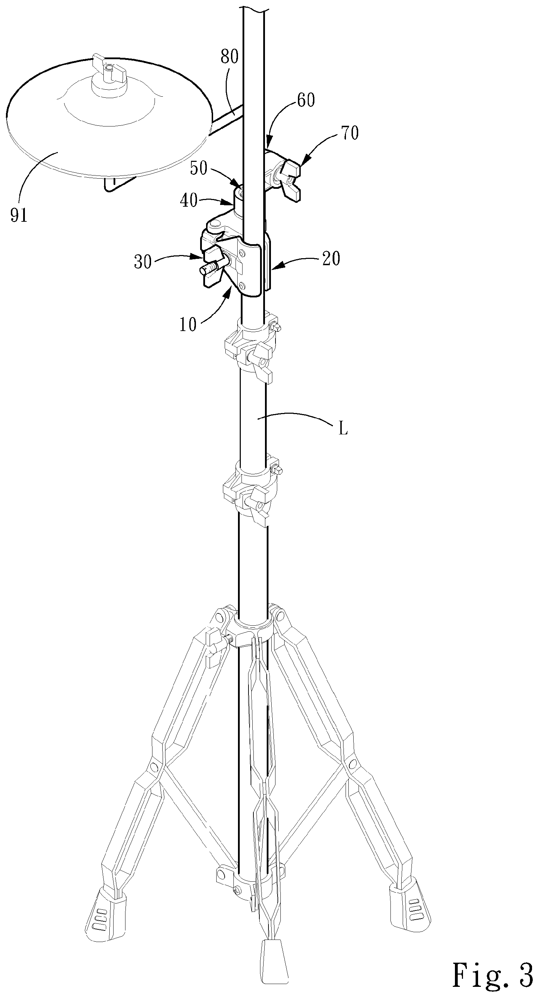

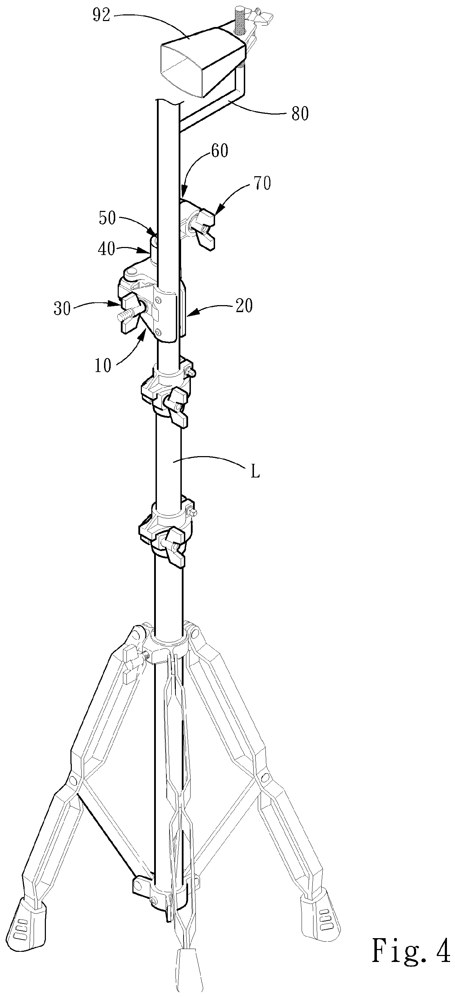

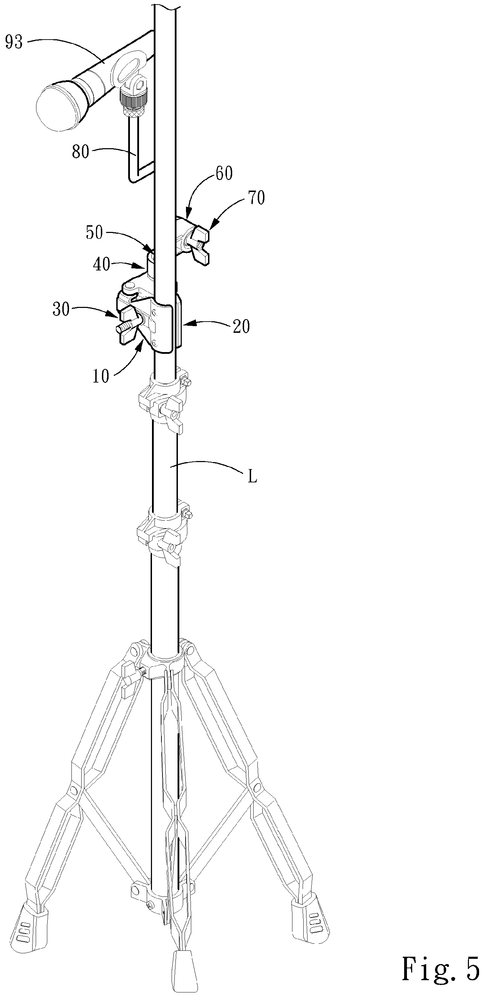

Please refer to Fig. 3, Fig. 4, and Fig. 5, the first clamping block 10 and the second clamping block 20 of the present invention sandwich the vertical rod L, and the mounting rod 80 can be used install various musical instruments or auxiliary equipment, such as a cymbal 91 as shown in Fig. 3, a cowbell 92 as shown in Fig. 4, or a microphone 93 as shown in Fig. 5.

As mentioned above, the present invention has characteristics as follows:
1. The mounting rod can be used to set up various musical instruments or auxiliary equipment, and has degrees of rotational freedom in two directions through the vertical rotating joint and the horizontal rotating joint, so the tilt angle can be freely adjusted.
2. In order to press the first clamping block and the second clamping block closer together through the first screw locking head and the first bolt, so that the first clamping surface and the second clamping surface sandwich the vertical rod, Once the first screw locking head and the first bolt are damaged, which can be directly replaced to increase the service life.

## Claims

1. A clamping rod frame provided for clamping a vertical rod (L), comprising:
a first clamping block (10), comprising a first clamping surface (11) configured to be positioned adjacent to the vertical rod (L);
a second clamping block (20), comprising a second clamping surface (21) configured to be positioned adjacent to the vertical rod (L), the first clamping block (10) comprising a first through hole (101), and the second clamping block (20) comprising a second through hole (201) corresponded to the first through hole (101);
a first locking member (30), comprising a first screw locking head (31) and a first bolt (32), the first bolt (32) passing through the second through hole (201) and the first through hole (101) and being screw locked with the first screw locking head (31), the first screw locking head (31) and the first bolt (32) pressing the first clamping block (10) close to the second clamping block (20), so that the vertical rod (L) can be sandwiched between the first clamping surface (11) and the second clamping surface (21);
a vertical rotating joint (40), comprising a first vertical joint (41) and a second vertical joint (42) overlapping and relatively rotating to each other, and the first vertical joint (41) being connected to the second clamping block (20);
a second locking member (50), comprising a second screw locking head (51) and a second bolt (52), the second screw locking head (51) and the second bolt (52) pressing the first vertical joint (41) and the second vertical joint (42) to clamp and fix each other;
a horizontal rotating joint (60), comprising a first horizontal joint (61) and a second horizontal joint (62) overlapping and relatively rotating to each other, and the first horizontal joint (61) being connected to the second vertical joint (62);
a third locking member (70), comprising a third screw locking head (71) and a third bolt (72), the third bolt (72) passing through the second horizontal joint (62) and the first horizontal joint (61) and being screw locked with the third screw locking head (71), the third screw locking head (71) and the third bolt (72) pressing the first horizontal joint (61) and the second horizontal joint (62) to clamp and fix each other, and the third bolt (72) being provided with a mounting ring (73) at an end opposite to the third screw locking head (71), the second horizontal joint (62) being provided with an accommodating slot (621) and a groove (622), the accommodating slot (621) correspondingly accommodating the mounting ring (73), the groove (622) crossing the accommodation slot (621) and penetrating the second horizontal joint (62), and the groove (622) being in a direction identical to an axial direction of the mounting ring (73); and
a mounting rod (80), inserted into the mounting ring (73) and pressed and fixed by the groove (622) when the first horizontal joint (61) and second horizontal joint (62) are clamped;
**characterized in that** the first clamping block (10) and the second clamping block (20) are pivotally connected together through a pivot (12) so that the first clamping block (10) and the second clamping block (20) can rotate relative to each other to allow the first clamping surface (11) and the second clamping surface (21) to come close together, wherein the second bolt (52) passes through the second vertical joint (42) and the first vertical joint (41) and is screw locked with the second screw locking head (51).

2. The clamping rod frame according to claim 1, wherein the first clamping surface (11) and the second clamping surface (21) are respectively provided with a plurality of clamping soft pads (13).

3. The clamping rod frame according to claim 2, wherein the first clamping surface (11) and the second clamping surface (21) are respectively provided with a plurality of through holes(111, 211), and the plurality of clamping soft pads (13) of the first clamping surface (11) and the second clamping surface (21) are respectively provided with a protruding post (131) to engage with each of the plurality of through holes (111, 211).

4. The clamping rod frame according to any of the preceding claims, wherein the first bolt (32) is inserted into a conical spring (33), and a conical direction of the conical spring (33) is toward the first screw locking head (31).

5. The clamping rod frame according to any of the preceding claims, wherein the second bolt (52) and the third bolt (72) are respectively inserted into a compression spring (53, 63).

6. The clamping rod frame according to any of the preceding claims, wherein the first screw locking head (31), the second screw locking head (51) and the third screw locking head (71) respectively press the first clamping block (10), the first vertical joint (41) and the first horizontal joint (61) by a baffle (90).

7. The clamping rod frame according to any of the preceding claims, wherein the second through hole (101) is rectangular, and the first bolt (32) is provided with a rectangular block (321) to engage with the second through hole (201) correspondingly.

8. The clamping rod frame according to any of the preceding claims, wherein the first through hole (101) is an elongated hole.

9. The clamping rod frame according to any of the preceding claims, wherein contact surfaces of the first vertical joint (41) and the second vertical joint (42) are respectively provided with a first concave and convex engaging structure (43).

10. The clamping rod frame according to any of the preceding claims, wherein contact surfaces of the first horizontal joint (61) and the second horizontal joint (62) are respectively provided with a second concave and convex engaging structure (64).

## Patentansprüche

1. Klemmstangen-Halter, ausgelegt zum Klemmen einer vertikalen Stange (L), umfassend:
einen ersten Klemmblock (10) mit einer ersten Klemmfläche (11), die so ausgelegt ist, dass sie benachbart zur vertikalen Stange (L) positioniert werden kann;
einen zweiten Klemmblock (20) mit einer zweiten Klemmfläche (21), die so ausgelegt ist, dass sie benachbart zur vertikalen Stange (L) positioniert werden kann, wobei der erste Klemmblock (10) ein erstes Durchgangsloch (101) aufweist und der zweite Klemmblock (20) ein zweites Durchgangsloch (201) aufweist, das korrespondierend zu dem ersten Durchgangsloch (101) vorgesehen ist;
ein erstes Feststellelement (30), das einen ersten Schraub-Feststellkopf (31) und einen ersten Schraubbolzen (32) umfasst, wobei der erste Schraubbolzen (32) sich durch das zweite Durchgangsloch (201) und das erste Durchgangsloch (101) erstreckt und mit dem ersten Schraub-Feststellkopf (31) verschraubt ist, wobei der erste Schraub-Feststellkopf (31) und der erste Schraubbolzen (32) den ersten Klemmblock (10) an den zweiten Klemmblock (20) drücken, so dass die vertikale Stange (L) zwischen der ersten Klemmfläche (11) und der zweiten Klemmfläche (21) geklemmt werden kann;
ein vertikales Drehgelenk (40), das ein erstes vertikales Gelenk (41) und ein zweites vertikales Gelenk (42) umfasst, die miteinander überlappen und relativ zueinander verdreht werden können, wobei das erste vertikale Gelenk (41) mit dem zweiten Klemmblock (20) verbunden ist;
ein zweites Feststellelement (50), das einen zweiten Schraub-Feststellkopf (51) und einen zweiten Schraubbolzen (52) umfasst, wobei der zweite Schraub-Feststellkopf (51) und der zweite Schraubbolzen (52) das erste vertikale Gelenk (41) und das zweite vertikale Gelenk (42) zusammenpressen, um diese miteinander zu klemmen und zu fixieren;
ein horizontales Drehgelenk (60), das ein erstes horizontales Gelenk (61) und ein zweites horizontales Gelenk (62) umfasst, die miteinander überlappen und relativ zueinander verdreht werden können, wobei das erste horizontale Gelenk (61) mit dem zweiten vertikalen Gelenk (62) verbunden ist;
ein drittes Feststellelement (70), das einen dritten Schraub-Feststellkopf (71) und einen dritten Schraubbolzen (72) umfasst, wobei der dritte Schraubbolzen (72) sich durch das zweite horizontale Gelenk (62) und das erste horizontale Gelenk (61) erstreckt und mit dem dritten Schraub-Feststellkopf (71) verschraubt ist, wobei der dritte Schraub-Feststellkopf (71) und der dritte Schraubbolzen (72) das erste horizontale Gelenk (61) und das zweite horizontale Gelenk (62) gegeneinander drücken, um diese zu klemmen und zu fixieren, und der dritte Schraubbolzen (72) an einem dem dritten Schraub-Feststellkopf (71) gegenüberliegenden Ende mit einem Befestigungsring (73) versehen ist, wobei das zweite horizontale Gelenk (62) mit einem Aufnahmeschlitz (621) und einer Nut (622) versehen ist, wobei der Aufnahmeschlitz (621) den Befestigungsring (73) entsprechend aufnimmt, die Nut (622) den Aufnahmeschlitz (621) kreuzt und das zweite horizontale Gelenk (62) durchdringt, und die Nut (622) in einer Richtung verläuft, die mit der axialen Richtung des Befestigungsrings (73) identisch ist; und
eine Befestigungsstange (80), die in den Befestigungsring (73) eingeführt und mittels der Nut (622) gedrückt und fixiert wird, wenn das erste horizontale Gelenk (61) und das zweite horizontale Gelenk (62) geklemmt sind;
**dadurch gekennzeichnet, dass** der erste Klemmblock (10) und der zweite Klemmblock (20) über einen Drehzapfen (12) schwenkbar miteinander verbunden sind, so dass der erste Klemmblock (10) und der zweite Klemmblock (20) relativ zueinander verdreht werden können, um die erste Klemmfläche (11) und die zweite Klemmfläche (21) einander anzunähern, wobei der zweite Schraubbolzen (52) durch das zweite vertikale Gelenk (42) und das erste vertikale Gelenk (41) verläuft und mit dem zweiten Schraub-Feststellkopf (51) verschraubt ist.

2. Klemmstangen-Halter nach Anspruch 1, wobei die erste Klemmfläche (11) und die zweite Klemmfläche (21) jeweils mit einer Mehrzahl von weichen Klemmpolstern (13) versehen sind.

3. Klemmstangen-Halter nach Anspruch 2, wobei die erste Klemmfläche (11) und die zweite Klemmfläche (21) jeweils mit einer Mehrzahl von Durchgangslöchern (111, 211) versehen sind, und die mehreren weichen Klemmpolster (13) der ersten Klemmfläche (11) und der zweiten Klemmfläche (21) jeweils mit einem vorstehenden Zapfen (131) versehen sind, um in eine entsprechende Durchgangsbohrung der Mehrzahl von Durchgangsbohrungen (111, 211) einzugreifen.

4. Klemmstangen-Halter nach einem der vorstehenden Ansprüche, wobei der erste Schraubbolzen (32) in eine konische Feder (33) eingeführt ist und die Kegelrichtung der konischen Feder (33) zum ersten Schraub-Feststellkopf (31) hin verläuft.

5. Klemmstangen-Halter nach einem der vorstehenden Ansprüche, wobei der zweite Schraubbolzen (52) und der dritte Schraubbolzen (72) jeweils in eine Druckfeder (53, 63) eingeführt sind.

6. Klemmstangen-Halter nach einem der vorstehenden Ansprüche, wobei der erste Schraub-Feststellkopf (31), der zweite Schraub-Feststellkopf (51) und der dritte Schraub-Feststellkopf (71) jeweils den ersten Klemmblock (10), das erste vertikale Gelenk (41) und das erste horizontale Gelenk (61) über eine Unterlegscheibe (90) andrücken.

7. Klemmstangen-Halter nach einem der vorstehenden Ansprüche, wobei das zweite Durchgangsloch (101) rechteckig ausgebildet ist und der erste Schraubbolzen (32) mit einem rechteckigen Block (321) versehen ist, um entsprechend in das zweite Durchgangsloch (201) einzugreifen.

8. Klemmstangen-Halter nach einem der vorstehenden Ansprüche, wobei das erste Durchgangsloch (101) ein Langloch ist.

9. Klemmstangen-Halter nach einem der vorstehenden Ansprüche, wobei die Kontaktflächen des ersten vertikalen Gelenks (41) und des zweiten vertikalen Gelenks (42) jeweils mit einer ersten konkaven und konvexen Eingriffsstruktur (43) versehen sind.

10. Klemmstangen-Halter nach einem der vorstehenden Ansprüche, wobei die Kontaktflächen des ersten horizontalen Gelenks (61) und des zweiten horizontalen Gelenks (62) jeweils mit einer zweiten konkaven und konvexen Eingriffsstruktur (64) versehen sind.

## Revendications

1. Un cadre de tige de serrage destiné à serrer une tige verticale (L), comprenant :
un premier bloc de serrage (10), comportant une première surface de serrage (11) configurée pour être positionnée à proximité de la tige verticale (L) ;
un deuxième bloc de serrage (20), comprenant une deuxième surface de serrage (21) configurée pour être positionnée à proximité de la tige verticale (L), le premier bloc de serrage (10) comprenant un premier trou traversant (101), et le deuxième bloc de serrage (20) comprenant un deuxième trou traversant (201) correspondant au premier trou traversant (101) ;
un premier élément de verrouillage (30), comprenant une première tête de verrouillage à vis (31) et un premier boulon (32), le premier boulon (32) traversant le deuxième trou traversant (201) et le premier trou traversant (101) et étant verrouillé par vissage avec la première tête de verrouillage à vis (31), la première tête de verrouillage à vis (31) et le premier boulon (32) pressant le premier bloc de serrage (10) contre le deuxième bloc de serrage (20), de sorte que la tige verticale (L) puisse être prise en sandwich entre la première surface de serrage (11) et la deuxième surface de serrage (21) ;
un joint rotatif vertical (40), comprenant un premier joint vertical (41) et un deuxième joint vertical (42) qui se chevauchent et tournent l'un par rapport à l'autre, le premier joint vertical (41) étant relié au deuxième bloc de serrage (20) ;
un deuxième élément de verrouillage (50), comprenant une deuxième tête de verrouillage à vis (51) et un deuxième boulon (52), la deuxième tête de verrouillage à vis (51) et le deuxième boulon (52) pressant le premier joint vertical (41) et le deuxième joint vertical (42) pour qu'ils se serrent et se fixent l'un à l'autre ;
un joint rotatif horizontal (60), comprenant un premier joint horizontal (61) et un deuxième joint horizontal (62) qui se chevauchent et tournent l'un par rapport à l'autre, le premier joint horizontal (61) étant relié au deuxième joint vertical (62) ;
un troisième élément de verrouillage (70), comprenant une troisième tête de verrouillage à vis (71) et un troisième boulon (72), le troisième boulon (72) traversant le deuxième joint horizontal (62) et le premier joint horizontal (61) et étant verrouillé par vis avec la troisième tête de verrouillage à vis (71), la troisième tête de verrouillage à vis (71) et le troisième boulon (72) exerçant une pression sur le premier joint horizontal (61) et le deuxième joint horizontal (62) pour les serrer et les fixer l'un à l'autre, et le troisième boulon (72) étant muni d'une bague de montage (73) à une extrémité opposée à la troisième tête de verrouillage à vis (71), le deuxième joint horizontal (62) étant muni d'une fente de logement (621) et d'une rainure (622), la fente de logement (621) recevant de manière correspondante la bague de montage (73), la rainure (622) traversant la fente de logement (621) et pénétrant dans le deuxième joint horizontal (62), et la rainure (622) étant orientée dans une direction identique à la direction axiale de la bague de montage (73) ; et
une tige de montage (80), insérée dans la bague de montage (73) et pressée et fixée par la rainure (622) lorsque le premier joint horizontal (61) et le deuxième joint horizontal (62) sont serrés ;
**caractérisé en ce que** le premier bloc de serrage (10) et le deuxième bloc de serrage (20) sont reliés de manière pivotante l'un à l'autre par l'intermédiaire d'un pivot (12) de sorte que le premier bloc de serrage (10) et le deuxième bloc de serrage (20) puissent tourner l'un par rapport à l'autre pour permettre à la première surface de serrage (11) et à la deuxième surface de serrage (21) de se rapprocher, le deuxième boulon (52) traversant le deuxième joint vertical (42) et le premier joint vertical (41) et étant bloqué par vis avec la deuxième tête de blocage à vis (51).

2. Le cadre de tige de serrage selon la revendication 1, dans lequel la première surface de serrage (11) et la deuxième surface de serrage (21) sont respectivement pourvues d'une pluralité de patins de serrage souples (13).

3. Le cadre de tige de serrage selon la revendication 2, dans lequel la première surface de serrage (11) et la deuxième surface de serrage (21) sont respectivement pourvues d'une pluralité de trous traversants (111, 211), et la pluralité de patins de serrage souples (13) de la première surface de serrage (11) et de la deuxième surface de serrage (21) sont respectivement pourvues d'un tenon saillant (131) destiné à s'engager dans chacun des trous traversants (111, 211).

4. Le cadre de tige de serrage selon l'une quelconque des revendications précédentes, dans lequel le premier boulon (32) est inséré dans un ressort conique (33), et la direction conique du ressort conique (33) est orientée vers la première tête de verrouillage à vis (31).

5. Le cadre de tige de serrage selon l'une quelconque des revendications précédentes, dans lequel le deuxième boulon (52) et le troisième boulon (72) sont respectivement insérés dans un ressort de compression (53, 63).

6. Le cadre de tige de serrage selon l'une quelconque des revendications précédentes, dans lequel la première tête de verrouillage à vis (31), la deuxième tête de verrouillage à vis (51) et la troisième tête de verrouillage à vis (71) pressent respectivement le premier bloc de serrage (10), le premier joint vertical (41) et le premier joint horizontal (61) par l'intermédiaire d'une cale (90).

7. Le cadre de tige de serrage selon l'une quelconque des revendications précédentes, dans lequel le deuxième trou traversant (101) est rectangulaire, et le premier boulon (32) est muni d'un bloc rectangulaire (321) destiné à s'engager de manière correspondante dans le deuxième trou traversant (201).

8. Le cadre de tige de serrage selon l'une quelconque des revendications précédentes, dans lequel le premier trou traversant (101) est un trou allongé.

9. Le cadre de tige de serrage selon l'une quelconque des revendications précédentes, dans lequel les surfaces de contact du premier joint vertical (41) et du deuxième joint vertical (42) sont respectivement pourvues d'une première structure d'engagement concave et d'une première structure d'engagement convexe (43).

10. Le cadre de tige de serrage selon l'une quelconque des revendications précédentes, dans lequel les surfaces de contact du premier joint horizontal (61) et du deuxième joint horizontal (62) sont respectivement pourvues d'une deuxième structure d'engagement concave et convexe (64).
